# EUROPÄISCHE PATENTANMELDUNG

(11) **EP 1 772 402 A2**
(43) Veröffentlichungstag der Anmeldung: **11.04.2007**
(21) Anmeldenummer: 06020347.8
(22) Anmeldetag: 28.09.2006
(51) Int. Cl.: B65G 47/14

(54) **Einrichtung zur Vereinzelung und Ausrichtung vorwiegend langstückiger Produkte**

(30) Priorität: 06.10.2005 DE 102005048558
(71) Anmelder: select Ingenieurgesellschaft für Optoelektronik, Bilderkennung und Qualitätsprüfung mbH, 09232 Hartmannsdorf (DE)
(72) Erfinder: Poller, Joachim, 09212 Limbach-Oberfrohna (DE); Ludwig, Jörg, 09212 Limbach-Oberfrohna (DE); Kirsch, Danny, 09244 Lichtenau (DE)
(74) Vertreter: Pfeiffer, Rolf-Gerd

(57) **Zusammenfassung**

Einrichtung zur Vereinzelung und Ausrichtung vorwiegend langstückiger Produkte. Die Aufgabe der Erfindung eine derartiges bewirkende Einrichtung anzugeben wird dadurch gelöst, dass einseitig in Längserstreckungs- und Förderrichtung x einer Rinne (11) eines Schwingförderers (1) parallel und einen Übergabebereich (ü) der Rinne (11) unterschneidend ein schmales Transportband (2) der Rinne (11) zugeordnet ist, dessen effektiv wirksame Breite (b) dem Durchmesser des zu transportierenden Gutes (g) derart angepasst ist, das nacheinander jeweils nur ein Stück des Gutes (g) vom Transportband (2) erfassbar ist.

## Beschreibung

Die Erfindung betrifft eine Einrichtung zur Vereinzelung und Ausrichtung vorwiegend langstückiger Produkte, insbesondere von landwirtschaftlichen Erzeugnissen wie Möhren, Karotten, Schwarzwurzeln, Spargel, Bohnen etc., aber auch Kartoffeln mit einer Längserstreckung.
Derartige Einrichtungen werden nicht nur in der Verpackungsindustrie, sondern bereits im Vorfeld im Rahmen der Vereinzelung und vollautomatischen allseitigen Inspektion der Produkte benötigt.

Ein optoelektronischer Sortierautomat zur allseitigen Inspektion von landwirtschaftlichen oder Lebensmittelprodukten ist bspw. in DE 41 27 903 C2 beschrieben, jedoch nicht Gegenstand vorliegender Erfindung, sondern dient lediglich zur Umreißung des Anwendungsfeldes vorliegender Erfindung. Der Einsatz von Schwingförderern zur Vereinzelung kleinstückiger Produkte, ebenfalls zur Qualitäts- und Größensortierung, ist in DE 196 46 753 C2 beschrieben, der mehrere parallele Förderkanäle aufweist, denen jeweils optoelektronische Erfassungsvorrichtungen zugeordnet sind.

Ein bislang unzureichend gelöstes Problem ist die Sortierung vorwiegend langstückiger Produkte mit dem Ziel deren vollständiger Vereinzelung und exakten Ausrichtung in Längsrichtung. Hier setzt vorliegende Erfindung an.

Der Erfindung liegt daher die Aufgabe zugrunde, eine Einrichtung, die Vorstehendes bewirkt anzugeben. Weiterhin soll die zu schaffende Einrichtung derart ausgebildet sein, dass sie als Zusatzmodul in bereits bestehende Sortiervorrichtungen integrierbar ist.

Die Aufgabe wird unter Einsatz eines an sich bekannten Schwingförderers durch die kennzeichnenden Merkmale von Anspruch 1 gelöst. Vorteilhafte Ausgestaltungen sind Gegenstand der nachgeordneten Ansprüche.
Das Wesen der Erfindung besteht darin, dass einseitig in Längserstreckungs- und Förderrichtung einer Rinne des Schwingförderers parallel und einen Übergabebereich der Rinne unterschneidend ein schmales Transportband der Rinne zugeordnet ist, dessen effektiv wirksame Breite dem Durchmesser des zu transportierenden Gutes derart angepasst ist, das nacheinander jeweils nur ein Stück des Gutes vom Transportband erfassbar ist.

Die Erfindung soll nachstehend anhand eines Ausführungsbeispiels und schematischer Zeichnungen näher erläutert werden. Es zeigen:
- Fig. 1: eine mögliche Ausführungsform der Erfindung in Seitenansicht,
- Fig. 2: die Ausführung nach Fig. 1 in Draufsicht und
- Fig. 3: einen Schnitt der Einrichtung nach Fig. 1 in Förderrichtung.

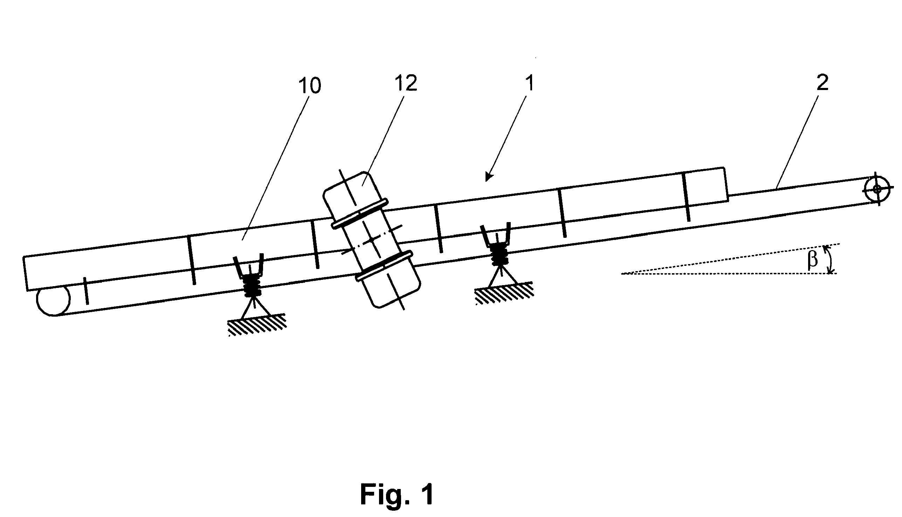

In Figur 1 sind in Seitenansicht der Einrichtung nur die beiden wesentlichen Einzelbestandteile, nämlich ein Schwingförderer **1** mit seinem Antrieb **12,** einer ersten Seitenwand **10** und ein separates Transportband **2** dargestellt. Zusätzlich ist angedeutet, dass der gesamten Einrichtung eine in Transportrichtung ansteigende Neigung in einem Winkel β gegeben sein kann, die abhängig von der Beschaffenheit und dem Zustand der Produkte variabel einstellbar ist und im Beispiel eine erprobte Auslenkung von 0° bis 8° erfuhr.

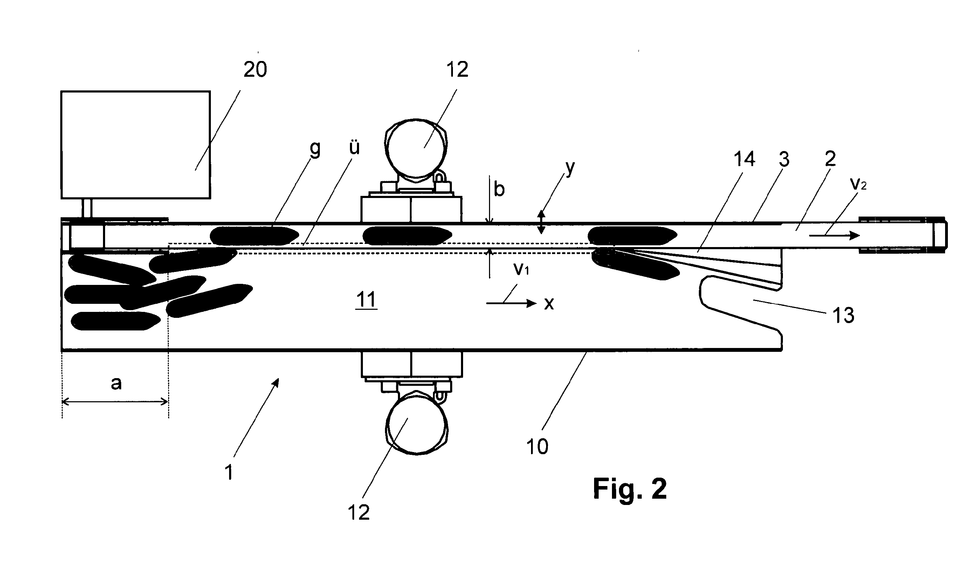

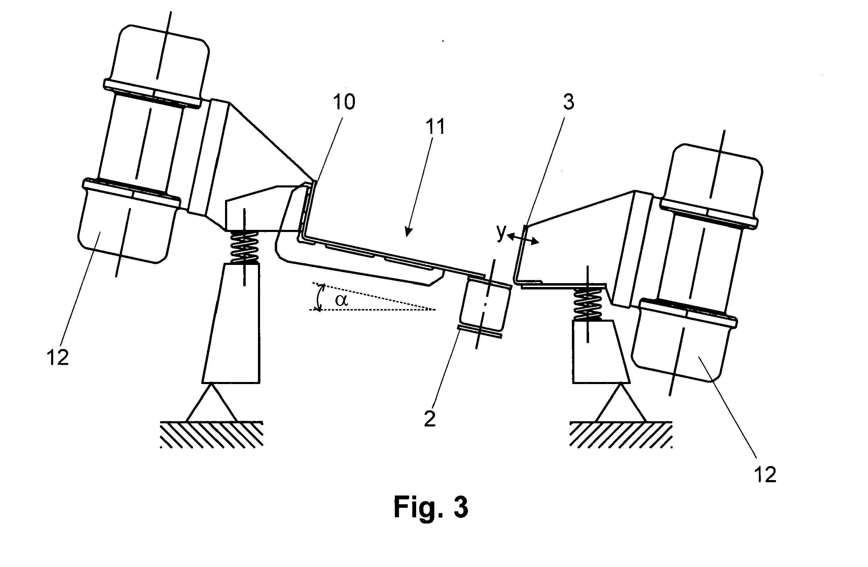

Nähere Details der Einrichtung sind aus Figur 2 ersichtlich, die die Einrichtung in Draufsicht zeigt. Dort ist zunächst der Schwingförderer **1** mit seinen Antrieben **12** dargestellt. Aus Gründen der Übersichtlichkeit wurde auf die Darstellung von notwendigen Rahmenhalterungen, die den Schwingförderer **1** mit seinen Antrieben **12** verbinden, verzichtet. Der Schwingförderer **1** weist eine Rinne **11** und eine erste Seitenwand **10** auf. Im Betrieb der Einrichtung werden die zu sortierenden und auszurichtenden Produkte **g** in einen Aufgabebereich **a** des Schwingförderers **1** kontinuierlich aufgegeben. Je nach Produktart und deren Beschaffenheit (bspw. Feuchtezustand, Oberflächenrauhigkeit o.ä.) kann die Fördergeschwindigkeit **v₁** in Förderrichtung **x** variabel eingestellt werden und liegt im Beispiel in der Größenordnung von 20 bis 30 cm/s. In der Längserstreckungsrichtung ist der einseitig offenen Rinne **11** des Schwingförderers **1** parallel zu diesem ein Transportband **2** zugeordnet, dem eine Fördergeschwindigkeit **v₂** in der Größenordnung des Vierfachen der Fördergeschwindigkeit des Schwingförderers im Betrieb verliehen ist. Wesentlich ist, dass die Fördergeschwindigkeit des Transportbandes **2** die des Schwingförderers **1** spürbar übersteigt. Zusätzlich kann dem Transportband **2** ein Muldenprofil quer zur Transportrichtung gegeben sein. Die effektive Breite **b** des Transportbandes ist bevorzugt durch eine verstellbare Wand **3,** deren Verstellrichtung in Fig. 2 durch einen Doppelpfeil **y** angedeutet ist und die die zweite Seitenwand zur Rinne **11** bildet, gebildet. Dadurch kann die effektive Breite **b** des Transportbandes **2** variabel dem Durchmesser des zu transportierenden Gutes **g** derart angepasst werden, dass nacheinander jeweils nur ein Stück des langstückigen Gutes **g** vom Transportband 2 erfassbar ist. Werden die zu sortierenden und auszurichtenden Produkte **g** (bspw. Möhren) in einen Aufgabebereich **a** der Rinne **11** aufgegeben, werden sie zunächst vom Schwingförderer **1** in Richtung **x** fortbewegt und einzelne Produkte gelangen auf das Transportband **2.** Je nach Produktart und -beschaffenheit kann bereits eine waagerechte Ausrichtung der Rinne quer zur Transportrichtung funktionsfähig sein, wenn die Rinne **11** nicht zu breit ausgelegt ist. Im Beispiel beträgt die Rinnenbreite 30 cm, wenn Möhren vereinzelt und ausgerichtet werden sollen. Ebenso ist es möglich die zweite Wand **3** bzgl. ihrer Lage dem Transportband **2** fest zuzuordnen und die effektive Breite **b** des Transportbandes **2** durch gemeinsames Verschieben von Transportband **2** und Wand **3** unter den Übergabebereich **ü** der Rinne **11** zu bewerkstelligen. Andere, ggf. auch variabel einstellbare Rinnenbreiten liegen im Rahmen der Erfindung. Vorteilhaft ist der Rinne **11** des Schwingförderers **1** zusätzlich eine leichte Neigung im Winkel α (im Beispiel 6° bis 10°, vgl. Fig. 3) in Richtung des Transportbandes **2** gegeben. Dadurch tendieren die Produkte g eher dazu in Richtung des Transportbandes **2** zu gelangen.
Insgesamt sind beide Transportwege so konstruiert, dass das Transportband **2** kein mitschwingender Bestandteil des Schwingförderers **1** selbst ist.
Im Rahmen der Erfindung ist es, wie vorstehend beschrieben, wesentlich, dass die effektive Breite **b** des Transportbandes **2** veränderbar ausgeführt ist, was eine problemlose Anpassung an das jeweilige Gut **g** gewährleistet. Dadurch ist ein produktdurchmesserabhängiger Abtransport ausgerichteter Produkte möglich, weil zur gleichen Zeit nur ein Produkt **g** auf das Band **2** gelangen kann.
Dadurch erfolgt durch das Transportband **2** ein sukzessiver Abtransport des angebotenen Fördergutes **g** nacheinander in ausgerichteter Weise. Sollten dennoch zwei Produkte **g** parallel bis in den Endbereich der Rinne **11** mitgenommen werden, bspw. durch Aneinanderkleben zweier Produkte, dient dort eine keilförmige produktabweisende Vorrichtung **14** dazu, das noch auf der Rinne **11** liegende Gut **g** von dem parallel auf dem Transportband **2** liegende Gut **g** zu trennen. Dieser Keil **14** ist bevorzugt tetraederförmig ausgebildet. Das derart abgetrennte Gut wird am Ende des Schwingförderers **1** abgeworfen, wozu in besonderer Ausgestaltung der Erfindung eine Aussparung **13** in der Rinne **11** vorgesehen ist. Die dort abgeworfenen Produkte können mit Hilfe einer nicht dargestellten Produktrückführung in den Aufgabebereich **a** zurück befördert werden.
Ohne die Erfindung darauf zu beschränken sei erwähnt, dass die effektive Länge des Schwingtroges im Beispiel 1,70 m und die des Transportbandes 2,0 m beträgt. Auf die nähere Ausgestaltung eines Schwingförderers **1** an sich, braucht hier nicht weiter eingegangen zu werden, da dies zum ingenieurmäßigen Wissen eines Fachmanns der Fördertechnik gehört, weshalb hier für den Antrieb des Schwingförderers **1** beispielhaft nur ein Wuchtmassenantrieb **12** angedeutet ist. Andere Antriebsformen und Betriebsweisen des Schwingförderers liegen somit im Rahmen der Erfindung. Das gleiche gilt für die Ausbildung des Transportbandes **2,** zu dem beispielhaft nur dessen gesonderter Antrieb **20** in Fig. 2 angedeutet ist.

Es sei betont, dass die vorgeschlagene Einrichtung sowohl einzeln betreibbar ist oder integrierter Bestandteil einer längeren Sortierstrecke sein kann. Beispielsweise können so vorteilhaft schon die Produkte ausrichtende Sortiereinrichtungen der hier vorgeschlagenen Einrichtung vorgeschaltet sein, so dass die Produkte im Wesentlichen schon ausgerichtet in den Aufgabebereiche **a** der hier vorgeschlagenen Einrichtung gelangen.

Alle in der Beschreibung, den Ausführungsbeispielen und den nachfolgenden Zeichnungen erkennbaren Merkmale können sowohl einzeln als auch in beliebiger Kombination miteinander erfindungswesentlich sein.

### Bezugszeichenliste

- 1 -: Schwingförderer
- 10 -: erste Seitenwand
- 11 -: Rinne
- 12 -: Antrieb
- 13 -: Aussparung
- 14 -: Keil
- 2 -: Transportband
- 20 -: Antrieb des Transportbandes
- 3 -: zweite (verstellbare) Wand
- a -: (Produkt-)aufgabebereich
- b -: effektive Transportbandbreite
- g -: Gut
- ü -: Übergabebereich
- x -: Transportrichtung des Schwingförderers und Transportbandes
- y -: Verstellrichtung der zweiten Wand
- v₁ -: Transportgeschwindigkeit des Schwingförderers
- v₂ -: Transportgeschwindigkeit des Transportbandes
- α -: Neigungswinkel der Rinne
- β -: Anstiegwinkel von Rinne und Transportband

## Patentansprüche

1. Einrichtung zur Vereinzelung und Ausrichtung vorwiegend langstückiger Produkte, beinhaltend einen Schwingförderer (1), **dadurch gekennzeichnet, dass** einseitig in Längserstreckungs- und Förderrichtung x einer Rinne (11) des Schwingförderers (1) parallel und einen Übergabebereich (ü) der Rinne (11) unterschneidend ein schmales Transportband (2) der Rinne (11) zugeordnet ist, dessen effektiv wirksame Breite (b) dem Durchmesser des zu transportierenden Gutes (g) derart angepasst ist, das nacheinander jeweils nur ein Stück des Gutes (g) vom Transportband (2) erfassbar ist.

2. Einrichtung nach Anspruch 1, **dadurch gekennzeichnet, dass** der Schwingförderer (1) und das Transportband (2) gemeinsam in Transportrichtung x in Abhängigkeit von Produktbeschaffenheit und -zustand in einem vorgebbaren Winkel β anstellbar gelagert ist.

3. Einrichtung nach Anspruch 2, **dadurch gekennzeichnet, dass** der Winkel β in einem Bereich von 0° bis 8° frei wählbar ist.

4. Einrichtung nach Anspruch 1, **dadurch gekennzeichnet, dass** die einseitig offene Rinne (11) des Schwingförderers (1) quer zur Transportrichtung x in Richtung des Transportband (2) waagerecht oder in einem verstellbaren geneigt abfallenden Winkel α angeordnet ist.

5. Einrichtung nach Anspruch 4, **dadurch gekennzeichnet, dass** der Winkel α in einem Bereich von 0° bis 10° frei wählbar ist.

6. Einrichtung nach Anspruch 1, **dadurch gekennzeichnet, dass** vermittels einer senkrecht zur Transportrichtung x des Transportbandes (2) verstellbaren Wand (3), die die zweite Seitenwand zur Rinne (11) bildet, die effektiv wirksame Breite (b) des Transportbandes (2) dem Durchmesser des jeweiligen Gutes (g) anpassbar ist.

7. Einrichtung nach Anspruch 1, **dadurch gekennzeichnet, dass** eine Wand (3) dem Transportband (2) bzgl. ihrer Lage fest zugeordnet ist und die effektive Breite (b) des Transportbandes durch gemeinsame Verschiebung von Transportband (2) und Wand (3) unter den Übergabebereich (ü) der Rinne (11) verstellbar ist.

8. Einrichtung nach Anspruch 1, **dadurch gekennzeichnet, dass** das Transportband (2) in Förderrichtung x die Rinne (11) des Schwingförderers (1) überragt.

9. Einrichtung nach Anspruch 1, **dadurch gekennzeichnet, dass** im Endbereich der Rinne (11) eine produktabweisende Vorrichtung vorgesehen ist, die bis dahin ggf. parallel auf dem Transportband (2) und der Rinne (11) liegende Produkte trennt.

10. Einrichtung nach Anspruch 9, **dadurch gekennzeichnet, dass** die produktabweisende Vorrichtung durch einen in zwei Ebenen ansteigenden Keil (14) gebildet ist.

11. Einrichtung nach Anspruch 1, **dadurch gekennzeichnet, dass** die Rinne (11) im Endbereich mit einer Aussparung (13) versehen ist.
